# EUROPÄISCHE PATENTSCHRIFT

(11) **EP 3 911 466 B1**
(45) Veröffentlichungstag und Bekanntmachung des Hinweises auf die Patenterteilung: **05.10.2022**
(21) Anmeldenummer: 21710261.5
(22) Anmeldetag: 04.03.2021
(51) Int. Cl.: B23B 27/16, B23Q 17/09, B23B 27/12

(54) **SPANABHEBENDES WERKZEUG UND WERKZEUGMASCHINE MIT EINEM SOLCHEN WERKZEUG**
MACHINING TOOL AND MACHINE TOOL HAVING SUCH A TOOL
OUTIL D'USINAGE ET MACHINE-OUTIL COMPORTANT UN TEL OUTIL

(30) Priorität: 05.03.2020 DE 102020106038
(43) Veröffentlichungstag der Anmeldung: 24.11.2021
(73) Patentinhaber: Hartmetall-Werkzeugfabrik Paul Horn GmbH, 72072 Tübingen (DE)
(72) Erfinder: KREMLER, Tobias, 72124 Pliezhausen (DE)
(74) Vertreter: Witte, Weller & Partner Patentanwälte mbB
(86) Internationale Anmeldenummer: PCT/EP2021/055512
(87) Internationale Veröffentlichungsnummer: WO 2021/176014

(56) Entgegenhaltungen:
- DE-A1-102007 005 222
- DE-A1-102016 223 199
- DE-A1-102016 223 201
- US-A1- 2019 358 709

## Beschreibung

Die vorliegende Erfindung betrifft ein Werkzeug zur spanenden Bearbeitung eines Werkstücks gemäß dem Oberbegriff des Patentanspruches 1, wobei das Werkzeug insbesondere einen Schneideinsatz und einen Sensor aufweist, der dazu eingerichtet ist, ein Messsignal zu erzeugen, das abhängig von einer auf den Schneideinsatz einwirkenden Kraft ist. EP 1 984 142 B1 offenbart ein solches Werkzeug. Ferner betrifft die vorliegende Erfindung eine Werkzeugmaschine mit einem solchen Werkzeug und einer Auswerteeinheit, die über eine Datenverbindung mit dem Sensor verbunden ist.

Bei dem erfindungsgemäßen Werkzeug kann es sich grundsätzlich um jegliche Art von spanabhebenden Werkzeug handeln. Vorzugsweise handelt es sich bei dem erfindungsgemäßen Werkzeug um ein Drehwerkzeug oder ein Fräswerkzeug.

Der Einsatz von Sensoren zur Überwachung verschiedener auf das Werkzeug einwirkender Kräfte ist aus dem Stand der Technik bereits grundsätzlich bekannt.

Aus der EP 1 984 142 B1 ist es bspw. bekannt, mit piezokeramischen Sensoren die auf den Schneidkörper oder den Halter des Werkzeugs ausgeübten Druck-, Zug- und Scherkräfte zu messen und die Werkzeugmaschine derart zu steuern, dass Schäden durch Überlastung verhindert werden. Dabei werden Grenzwerte für die Kräfte vorgegeben, bei deren Überschreitung in die Bearbeitung eingegriffen wird.

Ein ähnliches Werkzeug, bei dem einer oder mehrere Sensoren am Werkzeug zum Zwecke einer präventiven Bruch-, Riss- und/oder Verschleißerkennung des Schneideinsatzes verwendet werden, ist aus der DE 10 2014 224 778 A1 bekannt.

Die Verwendung derartiger Sensoren in spanabhebenden Werkzeugen muss jedoch nicht zwangsläufig der Bruch- oder Verschleißerkennung des Schneideinsatzes dienen. Die Sensoren können grundsätzlich auch zur Qualitätssicherung und/oder Dokumentation eingesetzt werden. Beispielsweise lassen sich mit derartigen Sensoren die auf den Schneideinsatz des Werkzeugs während der Bearbeitung einwirkenden Kräfte über die Zeit aufzeichnen und zu Dokumentationszwecken abspeichern.

Unabhängig davon zu welchem Zweck ein solcher Sensor bei einem spanabhebenden Werkzeug eingesetzt wird, besteht häufig das Problem, den Sensor oder die Sensoren an einem geeigneten Ort innerhalb der Werkzeugmaschine oder innerhalb des Werkzeugs selbst anzuordnen.

Um eine möglichst genaue Messung zu ermöglichen, ist es generell wünschenswert, den Sensor möglichst nahe an der Bearbeitungsstelle, also möglichst nahe an der Schneide des Werkzeugs einzusetzen. Dies ist jedoch nicht nur aus Platzgründen, sondern auch aus reinen Stabilitätsgründen häufig problematisch. Beispielsweise ist es bei Werkzeugen mit austauschbaren Schneideinsätzen, die in einem Schneideinsatzhalter eingespannt werden, nur bedingt möglich, einen Sensor in der Schneideinsatzaufnahme unmittelbar zwischen dem Schneideinsatz und dem Schneideinsatzhalter anzubringen. Zwar würde dies eine sehr schneidennahe Messung ermöglichen. Eine derartige Anbringung ist bei den aus dem Stand der Technik bekannten Werkzeugen jedoch aus rein mechanischen Gründen eher ungeeignet, da der Sensor die Stabilität der Einspannung des Schneideinsatzes im Schneideinsatz beeinträchtigen könnte.

Eine Anbringung des Sensors an der Verbindungsstelle, an der das Werkzeug bzw. der Schneideinsatzhalter in der Werkzeugmaschine eingespannt ist, ist sowohl aus Platzgründen als auch aus Stabilitätsgründen hingegen wesentlich einfacher zu gewährleisten. Aufgrund der größeren Entfernung zur Bearbeitungsstelle führt eine derartige Anbringung des Sensors jedoch zu einer geringeren Genauigkeit der Messung.

Es ist daher eine Aufgabe der vorliegenden Erfindung, ein spanabhebendes Werkzeug mit einem Sensor bereitzustellen, wobei der Sensor möglichst schneidennah eingesetzt werden soll, ohne dabei jedoch die mechanische Stabilität des Werkzeugs negativ zu beeinträchtigen.

Diese Aufgabe wird erfindungsgemäß durch ein Werkzeug gemäß Anspruch 1 gelöst, das folgende Bauteile aufweist:
- ein Schneideinsatz mit zumindest einer Schneide
- ein Schneideinsatzhalter, der eine Schneideinsatzaufnahme zur Aufnahme des Schneideinsatzes aufweist,
- ein als Klemmkeil wirkendes Klemmelement, das zum Verklemmen des Schneideinsatzes im Schneideinsatzhalter in der Schneideinsatzaufnahme befestigbar ist,
- ein Befestigungselement zum Befestigen des Klemmelements in der Schneideinsatzaufnahme und gleichzeitigen Verklemmen des Schneideinsatzes im Schneideinsatzhalter, und
- ein Sensor, der dazu eingerichtet ist, ein Messsignal zu erzeugen, das abhängig von einer auf den Schneideinsatz einwirkenden Kraft ist, wobei das Klemmelement eine Aussparung aufweist, in der der Sensor angeordnet ist.

Gemäß einem weiteren Aspekt der vorliegenden Erfindung wird ferner eine Werkzeugmaschine mit einem solchen Werkzeug und einer Auswerteeinheit, die über eine Datenverbindung mit dem Sensor verbunden ist, bereitgestellt. Die Auswerteeinheit kann dazu eingerichtet sein, das Messsignal auszuwerten und in einer Speichereinheit zu Dokumentationszwecken abzuspeichern. Ebenso kann die Auswerteeinheit dazu eingerichtet sein, das Messsignal auszuwerten und die Werkzeugmaschine basierend auf dem ausgewerteten Messsignal zu steuern und/oder ein Warnsignal zu erzeugen, wenn das Messsignal einen vordefinierten Schwellwert überschreitet oder ein vordefiniertes Signalmuster aufweist.

Das Werkzeug gemäß der vorliegenden Erfindung zeichnet sich insbesondere in der Art der Anbringung des Sensors am Werkzeug aus. Erfindungsgemäß ist der Sensor in einer Aussparung angeordnet, die in das Klemmelement eingebracht ist. Das Klemmelement dient als Klemmkeil zum Verklemmen des Schneideinsatzes im Schneideinsatzhalter und wird dazu gemeinsam mit dem Schneideinsatz in der Schneideinsatzaufnahme befestigt. Die Befestigung des Klemmelements in der Schneideinsatzaufnahme erfolgt anhand eines separaten Befestigungselements.

Die Anbringung des Sensors in der Aussparung des Klemmelements hat insbesondere die folgenden Vorteile: Zunächst ermöglicht dies eine sehr platzsparende Anordnung des Sensors. Die Halterung des Schneideinsatzes innerhalb des Schneideinsatzhalters wird durch diese Art der Anbringung des Sensors kaum beeinflusst. Nichtsdestotrotz kann der Sensor auf diese Weise in unmittelbarer Nähe zu dem Schneideinsatz und damit sehr nahe an der Bearbeitungsstelle des Werkstücks angeordnet werden. Der Sensor ist daher kaum Störeinflüssen ausgesetzt. Durch die Anordnung in der Aussparung des Klemmelements kollidiert der Sensor auch nicht mit anderen Bauteilen des Werkzeugs. Ein weiterer wesentlicher Vorteil besteht darin, dass mittels des als Klemmkeil wirkenden Klemmelements eine sehr genaue Justierung der Position sowie der Einspannkraft des Sensors möglich ist. Alles in allem lässt sich dadurch eine sehr genaue Messung mit Hilfe des Sensors gewährleisten, ohne dass die Stabilität des Werkzeugs durch den Sensor in Mitleidenschaft gezogen wird.

Die oben genannte Aufgabe ist somit vollständig gelöst.

Vorzugsweise ist der Sensor passgenau oder mit etwas Spiel in der Aussparung angeordnet. Die Aussparung ist vorzugsweise als Vertiefung in einer der beiden Klemmflächen des Klemmelements ausgestaltet. Die Form der Aussparung kann beliebig sein, also bspw. in der Draufsicht rund oder rechteckig.

Gemäß einer bevorzugten Ausgestaltung ist der Sensor örtlich zwischen dem Klemmelement und dem Schneideinsatzhalter angeordnet. Dies ist gegenüber einer Anbringung örtlich zwischen dem Klemmelement und dem Schneideinsatz meist sowohl aus Platz- als auch aus Stabilitätsgründen von Vorteil.

Es sei jedoch angemerkt, dass der Sensor alternativ auch zwischen dem Klemmelement und dem Schneideinsatz angeordnet sein kann, ohne den Rahmen der vorliegenden Erfindung zu verlassen.

Vorzugsweise steht der Sensor im montierten Zustand des Werkzeugs sowohl mit dem Klemmelement als auch mit dem Schneideinsatzhalter in unmittelbarem Kontakt. Der Sensor kontaktiert also beide Bauteile des Werkzeugs vorzugsweise unmittelbar.

Dies hat im Wesentlichen den Vorteil einer direkten Kraftübertragung der zwischen Klemmelement und Schneideinsatzhalter wirkenden Kräfte auf den Sensor. Da diese Kräfte abhängig von den auf den Schneideinsatz einwirkenden Kräfte sind, lässt sich somit ein sehr genaues Messergebnis erzielen.

Gemäß einer bevorzugten Ausgestaltung weist der Sensor einen Kraftsensor auf.

Derartige Kraftsensoren werden häufig auch als Kraftaufnehmer bezeichnet. Grundsätzlich kommt erfindungsgemäß jede Art von Kraftsensor in Frage. Beispielsweise kann es sich bei dem Sensor bspw. um einen Federkörper-Kraftaufnehmer, einen piezoelektrischen Kraftaufnehmer, einen induktiven Kraftaufnehmer, einen kapazitiven Kraftaufnehmer, einen elektrodynamischen Kraftaufnehmer, einen resistiven Kraftaufnehmer oder einen magnetoelastischen Kraftaufnehmer handeln.

In den meisten Fällen erfolgt die Kraftmessung bei derartigen Kraftsensoren über eine Messung der elastischen Verformung durch Weg- oder Druck- oder Widerstandsmessung auf Basis einer der vorgenannten Messprinzipien.

Der Sensor kann auch einen Mehrachskraftsensor aufweisen. Dies hat den Vorteil, dass sich damit mehrdimensionale Kräfte messen und auswerten lassen. Beispielsweise lässt sich mit einem solchen Mehrachskraftsensor neben der reinen Schneid- bzw. Zerspankraft auch die Vorschubkraft des Werkzeugs messen.

An dieser Stelle sei angemerkt, dass vorliegend meist von "dem Sensor" (im Singular) die Rede ist. Grundsätzlich ist es jedoch auch möglich, mehrere Sensoren an der genannten Stelle am bzw. im Klemmelement anzuordnen, ohne den Rahmen der vorliegenden Erfindung zu verlassen. Ebenso ist es möglich, zusätzliche Sensoren an diversen weiteren Stellen am Werkzeug anzuordnen, ohne den Rahmen der vorliegenden Erfindung zu verlassen.

Gemäß einer weiteren Ausgestaltung ist das Klemmelement im Wesentlichen keilförmig ausgestaltet. Die Beschreibung "im Wesentlichen keilförmig" bezieht sich insbesondere auf die in der Seitenansicht des Klemmelements betrachtete geometrische Ausgestaltung. Das Klemmelement ist in seiner Gesamtgeometrie vorzugsweise prismatisch ausgestaltet und in der Seitenansicht bzw. im Längsquerschnitt trapezförmig bzw. keilförmig ausgestaltet.

Vorzugsweise weist das Klemmelement zwei schräg zueinander verlaufende Klemmflächen auf, wobei eine der Klemmflächen an dem Schneideinsatz anliegt und die andere Klemmfläche an dem Schneideinsatzhalter anliegt. Besonders bevorzugt verlaufen diese beiden Klemmflächen unter einem Winkel < 15° zueinander.

Eine derartige Neigung der beiden Klemmflächen zueinander hat insbesondere den Vorteil, dass es zwischen dem Klemmelement und dem Schneideinsatzhalter zu einer sog. Selbsthemmung kommt. Diese Selbsthemmung führt dazu, dass das Klemmelement samt Schneideinsatz in vollständig montiertem Zustand des Werkzeugs sich nicht ohne weiteres von dem Schneideinsatzhalter lösen lässt. Dies ist auch dann der Fall, wenn das Befestigungselement zur Befestigung des Klemmelements gelöst ist. Zur Realisierung dieser Selbsthemmung ist insbesondere ein Winkel zwischen den beiden Klemmflächen im Bereich von 5°-10° bevorzugt.

Gemäß einer weiteren Ausgestaltung erstreckt sich das Klemmelement ausgehend von einem vorderen Ende entlang einer Längsachse des Klemmelements hin zu einem hinteren Ende, das auf einen Grund der Schneideinsatzaufnahme zuweist, wobei sich das Klemmelement in seiner Höhe senkrecht zur Längsachse des Klemmelements zum hinteren Ende hin keilförmig verjüngt.

Die Breite des Klemmelements, welche ebenfalls senkrecht zur Längsachse des Klemmelements gemessen wird, ist vorzugsweise konstant entlang der gesamten Längsachse des Klemmelements. Die Höhe des Klemmelements, welche senkrecht zur Längsachse des Klemmelements und senkrecht zur Breite des Klemmelements gemessen wird, nimmt ausgehend vom vorderen Ende hin zum hinteren Ende des Klemmelements vorzugsweise stetig ab. Hierdurch entsteht während des Befestigens des Klemmelements in der Schneideinsatzaufnahme eine Art Verkeilung des Schneideinsatzes, welches zum Verklemmen des Schneideinsatzes im Schneideinsatzhalter führt. Während des Befestigens des Klemmelements wird das Klemmelement immer weiter in die Schneideinsatzaufnahme hineingezogen, wodurch die auf den Schneideinsatz ausgeübte Klemmkraft zunehmend erhöht wird.

Verjüngt sich das Klemmelement zu seinem hinteren Ende hin auf stetige Art und Weise, so nimmt auch die Klemmkraft während des Befestigens des Klemmelements in der Schneideinsatzaufnahme stetig zu. Dies ist insbesondere in dem vorliegenden Fall von Vorteil, da der Sensor zwischen dem Klemmelement und dem Schneideinsatzhalter angeordnet ist. Die stetige Kraftzunahme des Befestigens des Klemmelements führt somit auch zu einer stetigen Kraftzunahme auf den Sensor. Der Sensor lässt sich daher optimal justieren und dessen Vorspannkraft optimal einstellen. Auch dies ermöglicht wiederum sehr exakte Messergebnisse, die sich mit Hilfe des Sensors realisieren lassen.

Ferner ist es bevorzugt, dass eine Höhe des Sensors größer als eine parallel dazu gemessene Tiefe der Aussparung ist, so dass der Sensor über einen Rand der Aussparung absteht.

Der Sensor ragt also nach oben hin etwas aus der Aussparung heraus. Auf diese Weise lässt sich eine Vorspannung des Sensors erzeugen, da dieser im montierten Zustand des Werkzeugs schon vor Benutzung des Werkzeugs unter Vorspannung zwischen dem Klemmelement und dem Schneideinsatzhalter eingeklemmt ist.

Gemäß einer weiteren Ausgestaltung weist der Sensor ein Kabel auf, das über einen im Klemmelement angeordneten ersten Kabelkanalabschnitt, der in die Aussparung mündet, und einen im Schneideinsatzhalter angeordneten zweiten Kabelkanalabschnitt, der in montiertem Zustand des Werkzeugs mit dem ersten Kabelkanalabschnitt fluchtet, aus dem Inneren des Werkzeugs nach außen geführt ist.

Zwar wäre es grundsätzlich auch möglich den Sensor mit einer Sendeeinheit, bspw. mit einem Funksender, zu versehen um eine kabellose Datenverbindung mit der Auswerteeinheit der Werkzeugmaschine herzustellen. Aus Platzgründen lässt sich dies meist jedoch nicht gewährleisten. Zudem lässt sich mit Hilfe einer kabelgebundenen Datenverbindung in dem vorliegenden Anwendungsfall meist eine robustere und für Störungen geringer anfällige Datenverbindung realisieren.

Die beiden genannten Kabelkanalabschnitte, die in montiertem Zustand des Werkzeugs miteinander fluchten, gewährleisten eine einfache Möglichkeit, das Kabel des Sensors aus dem Inneren des Werkzeugs nach außen zu führen. Beide Kabelkanalabschnitte können beliebig geformt sein. Wichtig ist lediglich, dass die beiden Kabelkanalabschnitte im montierten Zustand des Werkzeugs miteinander fluchten. Vorzugsweise sind die beiden Kabelkanalabschnitte daher jeweils als Aussparung in dem Klemmelement bzw. in dem Schneideinsatzhalter ausgebildet.

Gemäß einer weiteren Ausgestaltung ist das Klemmelement derart an die Form der Schneideinsatzaufnahme angepasst, dass es in montiertem Zustand des Werkzeugs zumindest überwiegend im Schneideinsatzhalter versenkt ist. Mit "zumindest überwiegend" ist gemeint, dass zumindest 50% des Volumens des Klemmelements in montiertem Zustand des Werkzeugs im Schneideinsatzhalter versenkt ist. Vorzugsweise ist sogar zumindest 90% des Volumens des Klemmelements in montiertem Zustand des Werkzeugs im Schneideinsatzhalter versenkt.

Das Klemmelement steht in montiertem Zustand des Werkzeugs also vorzugsweise nicht mehr oder nur geringfügig aus dem Schneideinsatzhalter hervor. Hierdurch werden Kollisionen, insbesondere mit dem zu bearbeitenden Werkstück, effektiv vermieden.

Gemäß einer weiteren Ausgestaltung weist die Schneideinsatzaufnahme eine Klemmfläche auf, welche unter einem Winkel in Bezug auf die Längsachse des Klemmelements geneigt ist, einer ersten Seite des Klemmelements zugewandt ist und an der in montiertem Zustand des Werkzeugs der Sensor anliegt, wobei eine der ersten Seite gegenüberliegende zweite Seite des Klemmelements, die parallel zu der Längsachse des Klemmelements verläuft, in montiertem Zustand des Werkzeugs zumindest bereichsweise an dem Schneideinsatz anliegt.

Das Klemmelement ist vorzugsweise oberhalb des Schneideinsatzes in der Schneideinsatzaufnahme angeordnet. Dies erweist sich insbesondere in Bezug auf die Stabilität der Einspannung des Schneideinsatzes von Vorteil. Da der Sensor, wie bereits erwähnt, vorzugsweise über die Aussparung im Klemmelement, in der er angeordnet ist, absteht, berührt die erste Seite des Klemmelements die Klemmfläche der Schneideinsatzaufnahme nicht. Stattdessen berührt nur der Sensor diese Klemmfläche. Der Sensor steht vorzugsweise bis zu 1-2mm über die erste Seite des Klemmelements ab.

Gemäß einer weiteren Ausgestaltung ist es vorgesehen, dass das Befestigungselement eine Schraube aufweist, das Klemmelement eine Durchgangsbohrung aufweist und der Schneideinsatzhalter ein Innengewinde aufweist, in das die Schraube in montiertem Zustand des Werkzeugs durch die Durchgangsbohrung hindurch eingreift.

Die Schraube ist in montiertem Zustand des Werkzeugs vorzugsweise parallel zur Längsachse des Schneideinsatzhalters und parallel zur Längsachse des Klemmelements ausgerichtet. Die Schraube lässt sich somit relativ einfach durch das Klemmelement hindurch in den Schneideinsatzhalter einsetzen und festschrauben, um den Schneideinsatz mit Hilfe des Klemmelements im Schneideinsatzhalter zu verklemmen. Das Klemmelement weist hierzu eine Bohrung auf, deren Bohrungsachse in montiertem Zustand vorzugsweise parallel zur Längsachse des Schneideinsatzhalters und parallel zur Längsachse des Klemmelements ausgerichtet ist. Die Schraube kann auch als Differentialschraube ausgestaltet sein, wobei dann im der Durchgangsbohrung des Klemmelements ein Innengewinde angeordnet ist, das gegenläufig zu dem im Schneideinsatzhalter angeordneten Innengewinde ist.

Gemäß einer weiteren Ausgestaltung sind das das Klemmelement und der Schneideinsatzhalter aus Stahl, wohingegen der Schneideinsatz aus Hartmetall hergestellt ist. Hierdurch wird unter anderem die Stabilität der Verbindungen zwischen Schneideinsatzhalter, Schneideinsatz und Klemmelement verbessert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindungen sind in den Zeichnungen dargestellt und werden in der nachfolgenden Beschreibung näher erläutert. Es zeigen:
- Fig. 1: eine perspektivische Ansicht eines Ausführungsbeispiels des erfindungsgemäßen Werkzeugs;
- Fig. 2: eine Explosionsdarstellung des in Fig. 1 gezeigten Ausführungsbeispiels des erfindungsgemäßen Werkzeugs;
- Fig. 3: eine Längsschnittansicht des in Fig. 1 gezeigten Ausführungsbeispiels des erfindungsgemäßen Werkzeugs;
- Fig. 4: eine perspektivische Ansicht eines Ausführungsbeispiels eines in dem erfindungsgemäßen Werkzeug einsetzbaren Klemmelements mit darin eingesetztem Sensor;
- Fig. 5: eine perspektivische Ansicht des in Fig. 4 gezeigten Klemmelements ohne darin eingesetzten Sensor; und
- Fig. 6: ein schematisches Blockschaltbild einer Werkzeugmaschine gemäß einem Ausführungsbeispiel der vorliegenden Erfindung.

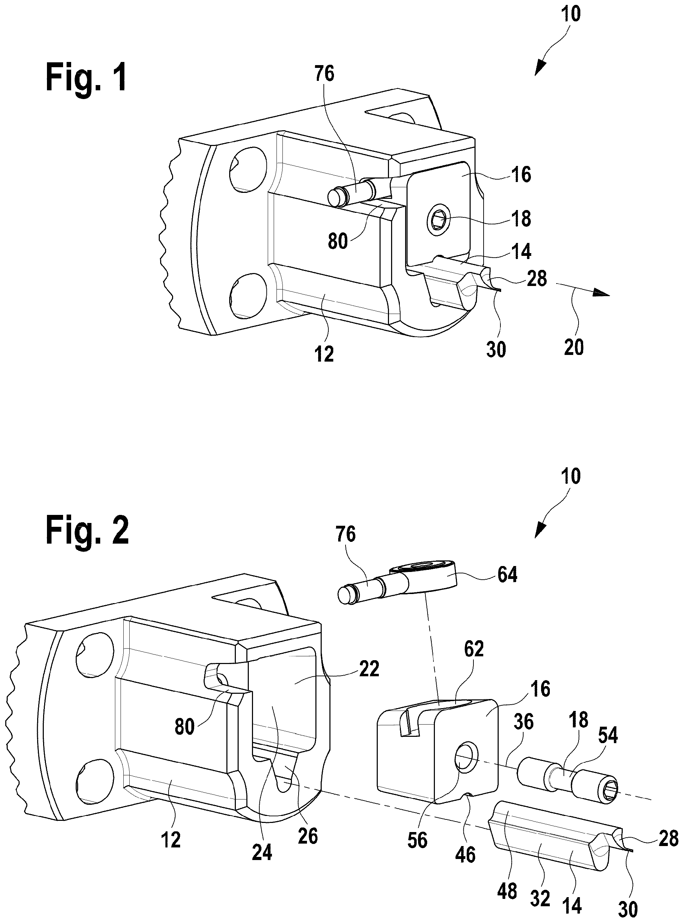

Die Figuren 1-3 zeigen ein Ausführungsbeispiel des erfindungsgemäßen Werkzeugs in einer perspektivischen Ansicht, einer Explosionsdarstellung sowie in einer Längsschnittansicht. Das erfindungsgemäße Werkzeug ist darin in seiner Gesamtheit mit der Bezugsziffer 10 bezeichnet.

Das Werkzeug 10 weist einen Schneideinsatzhalter 12 und einen austauschbaren Schneideinsatz 14 auf, welcher mit Hilfe eines Klemmelements 16 im bzw. am Schneideinsatzhalter 12 befestigbar ist. Das Klemmelement 16 ist seinerseits mit Hilfe eines Befestigungselements 18 im bzw. am Schneideinsatzhalter 12 befestigbar. Der Schneideinsatz 14 ist in montiertem Zustand des Werkzeugs 10 zwischen dem Klemmelement 16 und dem Schneideinsatzhalter 12 eingeklemmt.

Der Schneideinsatzhalter 12 erstreckt sich im Wesentlichen entlang einer Halterlängsachse, die in Fig. 1 mit einem Pfeil 20 angedeutet ist. Er weist an einem stirnseitigen Ende eine Schneideinsatzaufnahme 22 auf, die im vorliegenden Fall im Wesentlichen topfförmig ausgestaltet ist. Diese als topfförmige Ausnehmung ausgestaltete Schneideinsatzaufnahme 22 bildet eine Art Sackloch im Schneideinsatzhalter 12.

Die Schneideinsatzaufnahme 22 dient erfindungsgemäß nicht nur der Aufnahme des Schneideinsatzes 14, sondern auch der Aufnahme des Klemmelements 16. Die Schneideinsatzaufnahme 22 weist einen oberen Bereich 24 und einen unteren Bereich 26 auf (siehe Fig. 2). Der obere Bereich 24 dient der Aufnahme des Klemmelements 16. Der untere Bereich 26 dient der Aufnahme des Schneideinsatzes 14. Beide Bereiche 24, 26 sind offen zueinander, also nicht durch Wandungen voneinander getrennt. Der obere Bereich 24 hat, quer zur Halterlängsachse 20 betrachtet, vorzugsweise einen größeren Querschnitt als der untere Bereich 26. Dementsprechend weist auch das Klemmelement 16 vorzugsweise einen größeren Querschnitt auf als der Schneideinsatz 14.

Der Schneideinsatz 14 weist einen Schneidkopf 28 mit einer daran angeordneten Schneide 30 sowie einen Einspannabschnitt 32 auf. Der Einspannabschnitt 32 dient der Einspannung des Schneideinsatzes 14 im Schneideinsatzhalter 12.

Das erfindungsgemäße Werkzeug 10 zeichnet sich unter anderem durch die spezielle Art der Einspannung des Schneideinsatzes 14 im Schneideinsatzhalter 12 aus. Zur Einspannung des Schneideinsatzes 14 wird das Klemmelement 16 verwendet. Sowohl der Schneideinsatz 14 als auch das Klemmelement 16 sind als separat austauschbare Teile bereitgestellt, welche nicht fest bzw. dauerhaft miteinander verbunden sind.

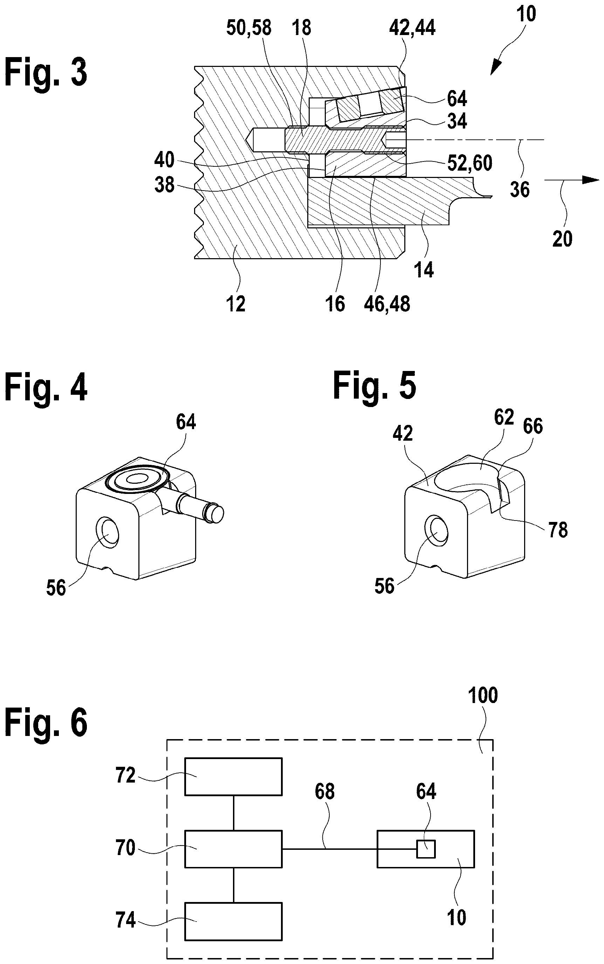

Das Klemmelement 16 ist im Wesentlichen keilförmig ausgestaltet ist. Dies ist insbesondere aus der in Fig. 3 dargestellten Längsschnittansicht des Werkzeugs 10 erkennbar. Es verjüngt sich ausgehend von einem vorderen Ende in seiner senkrecht zur Längsachse 36 des Klemmelements 16 gemessenen Höhe zu seinem hinteren Ende 38 hin keilförmig. Das hintere Ende 38 des Klemmelements 16 weist in montiertem Zustand des Werkzeugs 10 auf einen inneren Grund 40 der Schneideinsatzaufnahme 22 zu. An seiner Oberseite weist das Klemmelement 16 eine Klemmfläche 42 auf, die in montiertem Zustand des Werkzeugs 10 an einer korrespondierenden Klemmfläche 44 des Schneideinsatzhalters 12 anliegen kann (sofern der Sensor 64 nicht an dieser Stelle über die Klemmfläche 42 nach oben hin absteht, siehe weiter unten). Die beiden Klemmflächen 42, 44 verlaufen schräg geneigt in Bezug auf die Längsachse 36 des Klemmelements 16 bzw. in Bezug auf die dazu parallel verlaufende Halterlängsachse 20. Vorzugsweise schließen die Klemmflächen 42, 44 einen Winkel von < 15°, besonders bevorzugt einen Winkel von 5° - 10°, mit der Längsachse 36 des Klemmelements 16 bzw. der Halterlängsachse 20 ein. An seiner Unterseite weist das Klemmelement 16 eine konkav geformte Klemmfläche 46 auf, die an einer korrespondierend dazu konvex geformten Klemmfläche 48, welche an der Oberseite des Einspannabschnitts 32 des Schneideinsatzes 14 ausgebildet ist, anliegt.

Das Klemmelement 16 wird, wie bereits erwähnt, seinerseits mit Hilfe eines Befestigungselements 18 im Schneideinsatzhalter 12 befestigt. Dieses Befestigungselement 18 ist in dem vorliegend Ausführungsbeispiel als Schraube ausgestaltet. Genauer gesagt, ist diese Schraube 18 vorliegend als Differentialschraube ausgestaltet. Sie weist zwei zueinander gegenläufige Außengewinde 50, 52 auf, welche im Bereich der Mitte der Schraube 18 durch eine Umfangsnut 54 (siehe Fig. 2) voneinander getrennt sind.

Die Schraube 18 wird durch eine im Klemmelement 16 vorgesehene Durchgangsbohrung 56 hindurch in den Schneideinsatzhalter 12 eingeschraubt. Diese Durchgangsbohrung 56 verläuft entlang der Längsachse 36 des Klemmelements 16. Das erste Außengewinde 50 der Schraube 18 greift in ein erstes Innengewinde 58 ein, das im Schneideinsatzhalter 12 angeordnet ist. Das zweite Außengewinde 52 der Schraube 18 greift in ein zweites 58 der Schraube 18 greift in ein zweites Innengewinde 60 ein, das in der Durchgangsbohrung 56 des Klemmelements 16 ausgebildet ist. Das im Schneideinsatzhalter 12 vorgesehene erste Innengewinde 58 und das im Klemmelement 16 vorgesehene zweite Innengewinde 60 sind korrespondierend zu den beiden Außengewinde 50, 52 der Schraube 18 gegenläufig zueinander ausgestaltet.

Die gegenläufige Ausgestaltung der Außengewinde 50, 52 und der Innengewinde 58, 60 hat den Vorteil, dass das Klemmelement 16 während des Lösens der Differentialschraube 18 aktiv aus der Schneideinsatzaufnahme 22 hinausgeschoben wird. Klemmelement 16 und Schneideinsatz 14 lassen sich somit bspw. bei einem Schneideinsatz-Austausch leichter entnehmen. Gleichzeitig hat diese Art der Ausgestaltung auch den Vorteil, dass das Klemmelement 16 während des Anziehens der Differentialschraube 18 bzw. während des Montierens des Klemmelements 16 und des Schneideinsatzes 14 schon mittels weniger Umdrehungen der Differentialschraube 18 in die Schneideinsatzaufnahme 22 hineingezogen wird.

Es versteht sich jedoch, dass grundsätzlich auch eine andere Art von Schraube oder sogar eine völlig andere Art von Befestigungsmittel zur Befestigung des Klemmelements 16 verwendbar ist.

Das Klemmelement 16 weist eine Aussparung 62 auf, in der ein Sensor 64 angeordnet ist. Bei dem Sensor 64 handelt es sich vorzugsweise um einen Kraftsensor, der zur Messung einer auf den Schneideinsatz 14 ausgeübten Kraft eingesetzt wird. Besonders bevorzugt handelt es sich bei dem Sensor 64 um einen Mehrachskraftsensor, der dazu eingerichtet ist, die auf den Schneideinsatz 14 einwirkenden Kräfte in allen drei Dimensionen zu messen.

Der in der Aussparung 62 des Klemmelements 16 angeordnete Sensor 64 ist in montiertem Zustand des Werkzeugs 10 zwischen dem Klemmelement 16 und dem Schneideinsatzhalter 12 eingeklemmt. Er misst somit die zwischen dem Klemmelement 16 und dem Schneideinsatzhalter 12 wirkende Kraft. Da diese zwischen dem Klemmelement 16 und dem Schneideinsatzhalter 12 wirkende Kraft abhängig von der auf den Schneideinsatz 14 einwirkenden Kraft ist, ist das von dem Sensor 64 erzeugte Messsignal auch abhängig von der auf den Schneideinsatz 14 einwirkenden Kraft.

Die Aussparung 62 ist als eine in die Klemmfläche 42 des Klemmelements 16 eingebrachte Vertiefung ausgestaltet. Vorzugsweist ist die Aussparung 62 derart bemessen, dass der Sensor 64 darin passgenau aufnehmbar ist. Die Tiefe der Aussparung 62 ist jedoch vorzugsweise etwas geringer bemessen als die parallel dazu gemessene Höhe des Sensors 64. Dies hat zur Folge, dass der Sensor 64 nach oben hin etwas über den Rand 66 der Aussparung 62 absteht. Vorzugsweise steht der Sensor 64 nur wenige Mikrometer über den Rand 66 der Aussparung 62 ab. Er kann jedoch bis zu 1-2mm über die Aussparung 62 abstehen Dies verbessert die Einspannung des Sensors 64 zwischen dem Klemmelement 16 und dem Schneideinsatzhalter 12 und erzeugt eine Vorspannung des Sensors 64, die wiederum eine verbesserte Signalauswertung ermöglicht.

Ein besonderer Vorteil in der Art der Anbringung des Sensors 64 innerhalb des Klemmelements 16 besteht darin, dass dieser durch die Anordnung in der Aussparung 62 einerseits sehr platzsparend untergebracht ist. Andererseits wird die Stabilität der Einspannung des Schneideinsatzes 14 durch den Sensor 64 kaum beeinträchtigt. Ein weiterer wesentlicher Vorteil der Anordnung des Sensors 64 innerhalb der Aussparung 62 des Klemmelements 16 besteht darin, dass sich die Position des Sensors 64 sowie dessen Vorspannung sehr einfach und dennoch sehr exakt gemeinsam mit der Position des Klemmelements 16 und dessen Vorspannung justieren lässt. Ferner hat die beschriebene Art der Anordnung des Sensors 64 den Vorteil, dass sich aufgrund der Nähe zum Schneideinsatz 14 die Bearbeitungskräfte sehr schneidennah messen lassen. Insgesamt ermöglicht dies eine sehr exakte und robuste Messung der auf den Schneideinsatz 14 einwirkenden Kräfte mit Hilfe des Sensors 64.

Das vom Sensor 64 erzeugte Messsignal lässt sich, wie in Fig. 6 schematisch angedeutet, über eine Datenverbindung 68 einer Auswerteeinheit 70 zuführen, die dazu eingerichtet ist, das Messsignal auszuwerten und entsprechend weiterzuverarbeiten. Die Auswerteeinheit 70 kann bspw. Teil einer Werkzeugmaschine 100 sein, in der das Werkzeug 10 verwendet wird. Die Auswerteeinheit 70 kann grundsätzlich jedoch auch als eine separate Einheit ausgestaltet sein, die nicht unmittelbar in die Werkzeugmaschine 100 integriert ist.

Bezüglich der Auswertung und Weiterverarbeitung des vom Sensor 64 erzeugten Messsignals sind diverse Möglichkeiten denkbar. Die Auswerteeinheit 70 kann dazu eingerichtet sein, das Messsignal bspw. zum Zwecke der Dokumentation oder Qualitätssicherung in einer Speichereinrichtung 72 abzuspeichern. Ebenso ist es möglich, dass die Auswerteeinheit 70 dazu eingerichtet ist, die Werkzeugmaschine 100 basierend auf dem Messsignal zu steuern. Beispielsweise kann die Auswerteeinheit 70 dazu eingerichtet sein, die Werkzeugmaschine 100 zum Stoppen zu bringen, wenn das Messsignal einen vordefinierten Schwellwert überschreitet oder ein vordefiniertes Signalmuster aufweist, das Rückschlüsse auf eine beschädigte oder verschlissene Schneide 30 des Schneideinsatzes 14 zulässt. Gemäß einer weiteren Ausgestaltung kann die Auswerteeinheit 70 dazu eingerichtet sein, über eine Ausgabeeinheit ein Warnsignal zu erzeugen, wenn das vom Sensor 64 erzeugte Messsignal einen vordefinierten Schwellwert überschreitet oder ein vordefiniertes Signalmuster aufweist. Die Ausgabeeinheit 74 kann einen Bildschirm aufweisen, auf dem das Warnsignal als Bildschirmanzeige visuell dargestellt wird. Ebenso kann die Ausgabeeinheit 74 einen Lautsprecher aufweisen durch den das Warnsignal akustisch erzeugt wird.

Die Datenverbindung 68 kann sowohl als kabellose als auch als kabelgebundene Datenverbindung ausgestaltet sein. In dem vorliegend gezeigten Ausführungsbeispiel ist die Datenverbindung 68 vorzugsweise als kabelgebundene Datenverbindung ausgestaltet. Der Sensor 64 weist hierzu ein Kabel 76 auf, das seitlich aus dem Klemmelement 16 und dem Schneideinsatzhalter 12 hinausgeführt ist. Im Klemmelement 16 ist dazu ein erster Kabelkanalabschnitt 78 vorgesehen, der in die Aussparung 62 mündet (siehe Fig. 5). Im Schneideinsatzhalter 12 ist ein zweiter Kabelkanalabschnitt 80 vorgesehen, der in montiertem Zustand des Werkzeugs 10 mit dem ersten Kabelkanalabschnitt 78 fluchtet (siehe Figs. 1 und 2). Beide Kabelkanalabschnitte 78, 80 sind jeweils als eine Aussparung ausgebildet, die seitlich in das Klemmelement 16 bzw. seitlich in den Schneideinsatzhalter 12 eingebracht ist.

Abschließend sei erwähnt, dass das vorliegend gezeigte Ausführungsbeispiel des erfindungsgemäßen Werkzeugs 10 nur ein beliebiges von vielen möglichen Ausführungsbeispielen zur Realisierung der vorliegenden Erfindung ist. Der Schneideinsatzhalter 12 muss keineswegs, wie vorliegend gezeigt, als Kassettenhalterung ausgebildet sein. Genauso gut kann es sich bei dem Schneideinsatzhalter 12 um einen rein balkenförmigen Halter handeln, wie er für herkömmliche Drehwerkzeuge üblich ist. Ebenso kann der Schneideinsatzhalter 12 zylindrisch ausgestaltet sein. Auch der Schneideinsatz 14 kann grundsätzlich in seiner Form von der vorliegend gezeigten Form abweichen, ohne den Rahmen der vorliegenden Erfindung zu verlassen. Beispielsweise kann der Schneideinsatz 14 auch als platten- oder stabförmige Wendeschneidplatte ausgestaltet sein. Die Schneideinsatzaufnahme muss nicht, wie vorliegend gezeigt, zwangsweise topfförmig ausgestaltet sein. Stattdessen kann die Schneideinsatzaufnahme 22 auch mit Hilfe zweier Klemmbacken ausgestaltet sein, die am Schneideinsatzhalter 12 ausgebildet sind und zwischen denen das Klemmelement 16 und der Schneideinsatz 14 einspannbar sind.

## Patentansprüche

1. Werkzeug (10) zur spanenden Bearbeitung eines Werkstücks, aufweisend:
- ein Schneideinsatz (14) mit zumindest einer Schneide (30),
- ein Schneideinsatzhalter (12), der eine Schneideinsatzaufnahme (22) zur Aufnahme des Schneideinsatzes (14) aufweist,
- ein Befestigungselement (18),
- ein Sensor (64), der dazu eingerichtet ist, ein Messsignal zu erzeugen, das abhängig von einer auf den Schneideinsatz (14) einwirkenden Kraft ist,
**dadurch gekennzeichnet, dass** das Werkzeug
- ein als Klemmkeil wirkendes Klemmelement (16) aufweist, das zum Verklemmen des Schneideinsatzes (14) im Schneideinsatzhalter (12) in der Schneideinsatzaufnahme (22) befestigbar ist,
- wobei das Klemmelement (16) eine Aussparung (62) aufweist, in der der Sensor (64) angeordnet ist und
- wobei das Befestigungselement (18) zum Befestigen des Klemmelements (16) in der Schneideinsatzaufnahme (22) und gleichzeitigen Verklemmen des Schneideinsatzes (14) im Schneideinsatzhalter (12) vorgesehen ist.

2. Werkzeug gemäß Anspruch 1, wobei der Sensor (64) in montiertem Zustand des Werkzeugs (10) zwischen dem Klemmelement (16) und dem Schneideinsatzhalter (12) angeordnet ist.

3. Werkzeug gemäß Anspruch 2, wobei der Sensor (64) in montiertem Zustand des Werkzeugs (10) sowohl das Klemmelement (16) als auch den Schneideinsatzhalter (12) unmittelbar kontaktiert.

4. Werkzeug gemäß einem der Ansprüche 1-3, wobei der Sensor (64) einen Kraftsensor, insbesondere einen Mehrachskraftsensor, aufweist.

5. Werkzeug gemäß einem der Ansprüche 1-4, wobei das Klemmelement (16) keilförmig ausgestaltet ist.

6. Werkzeug gemäß einem der Ansprüche 1-5, wobei sich das Klemmelement (16) ausgehend von einem vorderen Ende (34) entlang einer Längsachse (36) des Klemmelements (16) hin zu einem hinteren Ende (38) erstreckt, das auf einen Grund (40) der Schneideinsatzaufnahme (22) zuweist, und wobei sich das Klemmelement (16) in seiner Höhe senkrecht zur Längsachse (36) des Klemmelements (16) zum hinteren Ende hin keilförmig verjüngt.

7. Werkzeug gemäß einem der Ansprüche 1-6, wobei eine Höhe des Sensors (64) größer als eine parallel dazu gemessene Tiefe der Aussparung (62) ist, so dass der Sensor (64) über einen Rand (66) der Aussparung (62) absteht.

8. Werkzeug gemäß einem der Ansprüche 1-7, wobei der Sensor (64) ein Kabel (76) aufweist, das über einen im Klemmelement (16) angeordneten ersten Kabelkanalabschnitt (78), der in die Aussparung (62) mündet, und einen im Schneideinsatzhalter (12) angeordneten zweiten Kabelkanalabschnitt (80), der in montiertem Zustand des Werkzeugs (10) mit dem ersten Kabelkanalabschnitt (78) fluchtet, aus dem Inneren des Werkzeugs (10) nach außen geführt ist.

9. Werkzeug gemäß einem der Ansprüche 1-8, wobei das Klemmelement (16) derart an die Form der Schneideinsatzaufnahme (22) angepasst ist, dass es in montiertem Zustand des Werkzeugs (10) zumindest überwiegend im Schneideinsatzhalter (12) versenkt ist.

10. Werkzeug gemäß einem der Ansprüche 6-9 wobei die Schneideinsatzaufnahme (22) eine Klemmfläche (44) aufweist, welche unter einem Winkel in Bezug auf die Längsachse (36) des Klemmelements (16) geneigt ist, einer ersten Seite des Klemmelements (16) zugewandt ist und an der in montiertem Zustand des Werkzeugs (10) der Sensor (64) anliegt, und wobei eine der ersten Seite gegenüberliegende zweite Seite des Klemmelements (16), die parallel zu der Längsachse (36) des Klemmelements (16) verläuft, in montiertem Zustand des Werkzeugs (10) zumindest bereichsweise an dem Schneideinsatz (14) anliegt.

11. Werkzeug gemäß einem der Ansprüche 1-10, wobei das Befestigungselement (18) eine Schraube aufweist, wobei das Klemmelement (16) eine Durchgangsbohrung (56) aufweist und der Schneideinsatzhalter (12) ein Innengewinde (58) aufweist, in das die Schraube in montiertem Zustand des Werkzeugs (10) durch die Durchgangsbohrung (56) hindurch eingreift.

12. Werkzeug gemäß Anspruch 11, wobei die Durchgangsbohrung (56) parallel zu der Längsachse (36) des Klemmelements (16) verläuft, die in montiertem Zustand des Werkzeugs (10) parallel zu einer Halterlängsachse (20) des Schneideinsatzhalters (12) ausgerichtet ist.

13. Werkzeug gemäß einem der Ansprüche 1-12, wobei das Klemmelement (16) und der Schneideinsatzhalter (12) aus Stahl sind und der Schneideinsatz (14) aus Hartmetall ist.

14. Werkzeugmaschine mit einem Werkzeug gemäß einem der Ansprüche 1-13 und einer Auswerteeinheit (70), die über eine Datenverbindung (68) mit dem Sensor (64) verbunden ist.

15. Werkzeugmaschine (100) gemäß Anspruch 14, wobei die Auswerteeinheit (70) dazu eingerichtet ist, dass Messsignal auszuwerten und
(i) in einer Speichereinrichtung (72) abzuspeichern; und/oder
(ii) die Werkzeugmaschine (100) basierend auf dem ausgewerteten Messsignal zu steuern; und/oder
(iii) eine Warnsignal zu erzeugen, wenn das Messsignal einen vordefinierten Schwellwert überschreitet oder ein vordefiniertes Signalmuster aufweist.

## Claims

1. A tool (10) for machining a workpiece, comprising:
- a cutting insert (14) having at least one cutting edge (30),
- a cutting insert holder (12) comprising a cutting insert receptacle (22) for receiving the cutting insert (14),
- a fastening element (18),
- a sensor (64) configured to generate a measurement signal that is dependent on a force acting on the cutting insert (14),
**characterized in that** the tool
- comprises a clamping element (16) acting as a clamping wedge, that is configured to be fastened in the cutting insert holder (22) for clamping the cutting insert (14) in the cutting insert holder (12),
- wherein the clamping element (16) comprises a recess (62) in which the sensor (64) is arranged, and
- wherein the fastening element (18) is provided for fastening the clamping element (16) in the cutting insert holder (22) and for simultaneously clamping the cutting insert (14) in the cutting insert holder (12).

2. The tool according to claim 1, wherein the sensor (64) is arranged between the clamping element (16) and the cutting insert holder (12) in a mounted state of the tool (10).

3. The tool according to claim 2, wherein the sensor (64) is in direct contact with both the clamping element (16) and the cutting insert holder (12) in a mounted state of the tool (10).

4. The tool according to one of claims 1-3, wherein the sensor (64) comprises a force sensor, in particular a multi-axis force sensor.

5. The tool according to one of claims 1-4, wherein the clamping element (16) is configured wedge-shaped.

6. The tool according to one of claims 1-5, wherein the clamping element (16) extends from a front end (34) along a longitudinal axis (36) of the clamping element (16) to a rear end (38) that faces a base (40) of the cutting insert receptacle (22), and wherein the clamping element (16) tapers in height perpendicular to the longitudinal axis (36) of the clamping element (16) toward the rear end in a wedge shape.

7. The tool according to one of claims 1-6, wherein a height of the sensor (64) is larger than a depth of the recess (62) measured parallel thereto such that the sensor (64) protrudes beyond an edge (66) of the recess (62).

8. The tool according to one of claims 1-7, wherein the sensor (64) comprises a cable (76) that is guided from an interior of the tool (10) to an exterior via a first cable duct section (78) arranged in the clamping element (16) and opening into the recess (62), and a second cable duct section (80) arranged in the cutting insert holder (12) and aligned with the first cable duct section (78) in a mounted state of the tool (10).

9. The tool according to one of claims 1-8, wherein the clamping element (16) is adapted to the shape of the cutting insert holder (22) in such a way that it is at least predominantly recessed in the cutting insert holder (12) in a mounted state of the tool (10).

10. The tool according to one of claims 6-9, wherein the cutting insert receptacle (22) comprises a clamping surface (44) which is inclined at an angle with respect to the longitudinal axis (36) of the clamping element (16), faces a first side of the clamping element (16) and against which the sensor (64) abuts in a mounted state of the tool (10), and wherein a second side of the clamping element (16), which is opposite the first side and extends parallel to the longitudinal axis (36) of the clamping element (16), abuts against the cutting insert (14) at least in regions in the mounted state of the tool (10).

11. The tool according to one of claims 1-10, wherein the fastening element (18) comprises a screw, wherein the clamping element (16) comprises a through bore (56), and the cutting insert holder (12) comprises an internal thread (58) in which the screw engages through the through bore (56) in a mounted state of the tool (10).

12. The tool according to claim 11, wherein the through bore (56) extends parallel to the longitudinal axis (36) of the clamping element (16) which, in a mounted state of the tool (10), is aligned parallel to a holder longitudinal axis (20) of the cutting insert holder (12).

13. The tool according to one of claims 1-12, wherein the clamping element (16) and the cutting insert holder (12) are made of steel and the cutting insert (14) is made of carbide.

14. A machine tool comprising a tool according to one of claims 1-13 and an evaluation unit (70) connected to the sensor (64) via a data link (68).

15. The machine tool (100) according to claim 14, wherein the evaluation unit (70) is configured to evaluate the measurement signal, and
(i) to store the measurement signal in a memory device (72); and/or
(ii) to control the machine tool (100) based on the evaluated measurement signal; and/or
(iii) to generate a warning signal if the measurement signal exceeds a predefined threshold value or has a predefined signal pattern.

## Revendications

1. Outil (10) pour l'usinage par enlèvement de copeaux d'une pièce à travailler, présentant :
- un insert de coupe (14) pourvu d'au moins une lame (30),
- un support d'insert de coupe (12) qui présente un logement d'insert de coupe (22) servant à recevoir l'insert de coupe (14),
- un élément de fixation (18),
- un capteur (64) qui est agencé pour produire un signal de mesure qui dépend d'une force agissant sur l'insert de coupe (14),
**caractérisé en ce que** l'outil
- présente un élément de serrage (16) agissant comme un coin de serrage et qui peut être fixé dans le logement d'insert de coupe (22) pour bloquer l'insert de coupe (14) dans le support d'insert de coupe (12),
- l'élément de serrage (16) présentant un évidement (62) dans lequel est disposé le capteur (64), et
- l'élément de fixation (18) étant prévu pour fixer l'élément de serrage (16) dans le logement d'insert de coupe (22) et pour bloquer simultanément l'insert de coupe (14) dans le support d'insert de coupe (12).

2. Outil selon la revendication 1, dans lequel, à l'état monté de l'outil (10), le capteur (64) est disposé entre l'élément de serrage (16) et le support d'insert de coupe (12).

3. Outil selon la revendication 2, dans lequel, à l'état monté de l'outil (10), le capteur (64) est en contact direct à la fois avec l'élément de serrage (16) et avec le support d'insert de coupe (12).

4. Outil selon l'une quelconque des revendications 1 à 3, dans lequel le capteur (64) présente un capteur de force, en particulier un capteur de force multiaxial.

5. Outil selon l'une quelconque des revendications 1 à 4, dans lequel l'élément de serrage (16) est configuré en forme de coin.

6. Outil selon l'une quelconque des revendications 1 à 5, dans lequel l'élément de serrage (16) s'étend en partant d'une extrémité avant (34) le long d'un axe longitudinal (36) de l'élément de serrage (16) jusqu'à une extrémité arrière (38) qui est orientée vers un fond (40) du logement d'insert de coupe (22), et dans lequel l'élément de serrage (16) s'amincit de manière conique au niveau de sa hauteur perpendiculairement à l'axe longitudinal (36) de l'élément de serrage (16) en direction de l'extrémité arrière.

7. Outil selon l'une quelconque des revendications 1 à 6, dans lequel une hauteur du capteur (64) est supérieure à une profondeur de l'évidement (62) mesurée en parallèle à celle-ci de sorte que le capteur (64) dépasse d'un bord (66) de l'évidement (62).

8. Outil selon l'une quelconque des revendications 1 à 7, dans lequel le capteur (64) présente un câble (76) qui est amené de l'intérieur de l'outil (10) vers l'extérieur en passant par une première section de conduit de câble (78) disposée dans l'élément de serrage (16) et qui débouche sur l'évidement (62), et par une deuxième section de conduit de câble (80) disposée dans le support d'insert de coupe (12) et qui, à l'état monté de l'outil (10), est en affleurement avec la première section de conduit de câble (78).

9. Outil selon l'une quelconque des revendications 1 à 8, dans lequel l'élément de serrage (16) est adapté à la forme du logement d'insert de coupe (22) de telle sorte qu'à l'état monté de l'outil (10), il est au moins substantiellement noyé dans le support d'insert de coupe (12).

10. Outil selon l'une quelconque des revendications 6 à 9, dans lequel le logement d'insert de coupe (22) présente une surface de serrage (44) qui est inclinée selon un angle par rapport à l'axe longitudinal (36) de l'élément de serrage (16), qui est orientée vers une première face de l'élément de serrage (16) et contre laquelle s'applique le capteur (64) à l'état monté de l'outil (10), et dans lequel une deuxième face de l'élément serrage (16), opposée à la première face, qui s'étend en parallèle à l'axe longitudinal (36) de l'élément de serrage (16) s'applique à l'état monté de l'outil (10) au moins par endroits contre l'insert de coupe (14).

11. Outil selon l'une quelconque des revendications 1 à 10, dans lequel l'élément de fixation (18) présente une vis, l'élément de serrage (16) présentant un trou traversant (56) et le support d'insert de coupe (12) présentant un taraudage (58) dans lequel s'engage la vis à l'état monté de l'outil (10) à travers le trou traversant (56).

12. Outil selon la revendication 11, dans lequel le trou traversant (56) s'étend en parallèle à l'axe longitudinal (36) de l'élément de serrage (16) qui, à l'état monté de l'outil (10), est aligné en parallèle à un axe longitudinal de support (20) du support d'insert de coupe (12).

13. Outil selon l'une quelconque des revendications 1 à 12, dans lequel l'élément de serrage (16) et le support d'insert de coupe (12) sont en acier, et l'insert de coupe (14) est en acier dur.

14. Machine-outil, comprenant un outil selon l'une quelconque des revendications 1 à 13 et une unité d'évaluation (70) qui est reliée au capteur (64) par une liaison de données.

15. Machine-outil (100) selon la revendication 14, dans laquelle l'unité d'évaluation (70) est agencée pour évaluer le signal de mesure et
(i) pour le stocker dans un équipement de stockage (72) ; et/ou
(ii) pour commander la machine-outil (100) sur la base du signal de mesure évalué ; et/ou
(iii) pour produire un signal d'alerte si le signal de mesure dépasse une valeur seuil prédéfinie ou présente une séquence de signal prédéfinie.
